# EUROPEAN PATENT APPLICATION

(11) **EP 1 398 692 A2**
(43) Date of publication of application: **17.03.2004**
(21) Application number: 03020899.5
(22) Date of filing: 15.09.2003
(51) Int. Cl.: G06F 9/44, G06F 9/445, H04Q 7/32, H04L 29/06

(54) **Method of supporting multiple languages for mobile communication terminal and communication system for the same**

(30) Priority: 14.09.2002 KR 2002055944
(71) Applicant: SAMSUNG ELECTRONICS CO., LTD., Suwon-City, Kyungki-do (KR)
(72) Inventor: Lee, Sung-Dae, Suwon-city Kyungki-do (KR)
(74) Representative: Grünecker, Kinkeldey, Stockmair & Schwanhäusser Anwaltssozietät

(57) **Abstract**

A communication system and method for supporting multiple languages for a mobile communication terminal. The system and method include a mobile communication network, a multiple language contents provider server (MLCPS) connected to the mobile communication network and having multiple language contents, and a mobile communication terminal wirelessly connected to the mobile communication network. The mobile communication terminal connects to the MLCPS through the mobile communication network, and transmits language package request data including at least one string set version and one font set version to the MLCPS according to request of a user. The mobile communication terminal also receives language package information provided by the MLCPS, divides the received language package information into a string set and a font set corresponding to languages and manages the string set and the font set, and displays menus and messages on a display window of the mobile communication terminal by a language selected by a user using the managed string set and font set. The MLCPS forms a corresponding language package in response to reception of the language package request data and transmits the language package to the mobile communication terminal through the mobile ) communication network.

## Description

The present invention relates generally to a language supporting system, and more particularly, to a method of supporting multiple languages for a mobile communication terminal.

Typical web support service technology, which includes such electronic commerce and information provider services as shopping malls and auctions on the Internet, and which uses multiple languages, can be divided into several methods. In one method, web services are provided using a translation common gateway interface (CGI). In another method, web services are provided using dedicated translation software. In a third method, web services are provided using a translation server. In such web service multiple language supporting technology, web services are translated into multiple languages under the control of a server on a web.

As mobile communication terminals are becoming more widespread throughout the world, roaming services between countries must be performed. As a result, a mobile communication network environment has been created, under which a smart card, such as a subscriber identification module (SIM) card, can be supported. For example, when a subscriber of a group special mobile or a global system for mobile telecommunications (GSM) enters a code division multiple access (CDMA) mobile communication service country, in order to obtain only an SIM card of his or her own and not have to purchase a new phone, a subscriber can lease an SIM card inserting CDMA terminal in an airport for example, and use a mobile telephone service with his or her telephone number. Accordingly, a multiple language supporting mobile communication terminal is demanded which lets a user lease a local terminal in a foreign country and use the mobile telephone service by a language he or she desires to use.

Currently, mobile communication terminals supporting multiple languages are designed to support only a specific group of languages, which are predetermined during the manufacturing of the terminal, unlike the technology of translating web services to multiple languages using a server on a web. For example, a terminal designed to support only English and Korean can support only English and Korean, and cannot support other languages such as Japanese and Chinese. Thus, when a user requires other languages than the languages determined to be supported during the manufacturing of the terminal, the terminal cannot support the required languages. In another example, a terminal designed to support eight languages can support only those eight languages. However, when a user wishes only to use one language, the remaining languages are unnecessary. As a result of the terminal supporting languages that are not used by the user, memory space in the mobile terminal allocated to the unused languages is wasted. Therefore, a need exists for a mobile communication terminal that conveniently and flexibly supports multiple languages desired by a user.

Accordingly, the present invention has been designed to solve the above-mentioned problems occurring in the prior art, and the object of the present invention is to provide a convenient method of supporting multiple languages to a user of a mobile communication terminal and a communication system for the same.

This object is solved by the invention as claimed in the independent claims.

Preferred embodiments are defined by the dependent claims.

An aspect of the present invention is to provide a flexible method of a mobile communication terminal supporting multiple languages and a communication system for the same.

Another aspect of the present invention is to provide a method of supporting multiple languages, which is capable of downloading only languages desired by a mobile communication terminal user, and displaying a terminal menu and messages on a display window in a desired language and a communication system for the same.

Accordingly, a communication system for supporting multiple languages for a mobile communication terminal is provided. The communication system comprises a mobile communication network, a multiple language contents provider server (MLCPS) connected to the mobile communication network and including multiple language contents, and a mobile communication terminal wirelessly connected to the mobile communication network. The mobile communication terminal connects to the MLCPS through the mobile communication network, transmits language package request data including at least one string set version and one font set version to the MLCPS according to a request from a user, receives language package information provided by the multiple language contents provider server, divides the received language package information into a string set and a font set corresponding to languages, manages the string set and the font set, and displays menus and messages on a display window of the mobile communication terminal by a language selected by a user using the managed string set and font set. The MLCPS forms a corresponding language package in response to reception of the language package request data and transmits the language package to the mobile communication terminal through the mobile communication network.

Also provided is a method of supporting multiple languages for a mobile communication terminal in a communication system including a mobile communication network, an MLCPS connected to the mobile communication network and including multiple language contents, and the mobile communication terminal wirelessly connected to the mobile communication network. The method comprises the steps of (a) transmitting language package request data including at least one string set version and one font set version to the MLCPS through the mobile communication network according to language request of a user of the mobile communication terminal, (b) when language package information provided by the MLCPS is downloaded, dividing the downloaded language package information into a string set and a font set corresponding to a language and managing the string set and the font set, and (c) displaying menus and messages on a terminal display by a language selected by a user using the managed string set and font set.

The present invention will be more apparent from the following detailed description taken in conjunction with the accompanying drawings, in which:
FIG. 1 is a block diagram of a communication system according to an embodiment of the present invention for supporting multiple languages in a mobile communication terminal;
FIG. 2 is a block diagram of a mobile terminal according to an embodiment of the present invention;
FIG. 3 illustrates a language package format according to an embodiment of the present invention;
FIG. 4 is a flowchart illustrating string and font processing controls in a mobile communication terminal that downloads a language package according to an embodiment of the present invention;
FIGs. 5A and 5B are block diagrams illustrating a language table and a font table according to an embodiment of the present invention; and
FIGS. 6A and 6B illustrate examples of a display screen when a user selects a language and a font.

Preferred embodiments of the present invention will be described in detail herein below with reference to the accompanying drawings. In the drawings, same elements are denoted by same reference numerals. In the following description of the present invention, a detailed description of known functions and configurations incorporated herein will be omitted when it may make the subject matter of the present invention rather unclear.

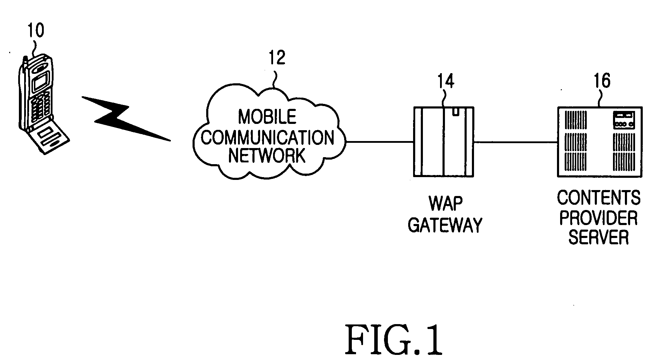

FIG. 1 is a block diagram of a communication system according to an embodiment of the present invention for supporting multiple languages by a mobile communication terminal. Referring to FIG. 1, a communication system for a mobile communication terminal supporting multiple languages includes a mobile communication terminal 10, a mobile communication network 12, a wireless application protocol (WAP) gateway 14, and an MLCPS16. The communication system illustrated in FIG. 1 is based on a wireless Internet of a WAP method. The communication system may be based on the wireless Internet of a mobile explorer (ME), which does not require the WAP gateway.

The mobile communication network 12 includes a mobile switching center (MSC), a base station controller (BSC), and a base transceiver system (BTS). The WAP gateway 14 located between the mobile communication network 12 and the MLCPS 16 performs an interface between the wire Internet network and the wireless Internet network, that is, the mobile communication network 12 and the MLCPS 16. The mobile communication terminal 10 connects to the MLCPS 16 through the mobile communication network 12, transmits language package requesting data essentially including a string set version and a font set version, which is requested by a user of the terminal, to the MLCPS 16, and receives language package information from the MLCPS 16. The mobile communication terminal 10 divides the received language package information into a string set and a font set corresponding to a language and manages the string set and the font set. The mobile communication terminal 10 displays a menu and messages on a display window in a language selected by the user using the string set and the font set. The MLCPS 16 has multiple language contents. The MLCPS 16 forms a corresponding language package according to a language package request by the mobile communication terminal 10 and transmits the formed language package to the mobile communication terminal 10 through the mobile communication network 12.

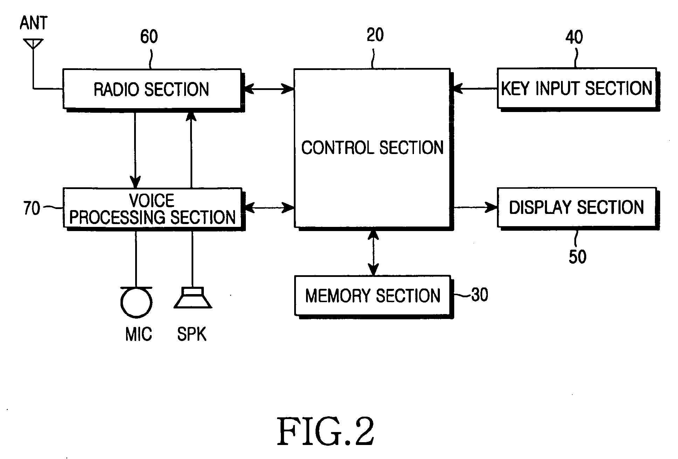

FIG. 2 illustrates a mobile terminal according to an embodiment of the present. Referring to FIG. 2, a control section 20 controls the entire mobile communication terminal. According to an embodiment of the present invention, the control section 20 requests a language package from the MLCPS 16, divides the language package downloaded from the MLCPS 16 into a string set and a font set, and manages the string set and the font set. A radio section 60 controls the transmission and reception of voice data and control data under the control of the control section 20. A voice processing section 70 converts the voice data received from the radio section 60 into an audible sound through a speaker SPK and creates a voice signal received from a microphone MIC data and outputs the data to the radio section 60. A key input section 40 includes a plurality of number keys, and function keys and outputs key input data corresponding to the keys pressed by the user to the control section 20. A display section 50 displays various messages under the control of the control section 20. A memory section 30 includes a data memory for storing program data required for controlling the mobile terminal operation and data generated while controlling the control section 20 or performing an operation according to a request of the user. According to an embodiment of the present invention, the memory section 30 includes a language table and a font table corresponding to each language, and a file storage region for storing a downloaded string set and font set file.

Referring back to FIG. 1, there are two methods for the MLCPS 16 to form the language package according to an embodiment of the present invention. According to a first method, a requested language package is formed when the mobile communication terminal 10 requests the language package. According to a second method, all kinds of language packages required by the mobile communication terminal 10 are previously formed. According to the first method, it takes a long time to form the language package. However, it is not necessary to previously form all possible language packages. According to the second method, it does not take a long time to form the language package. However, it is necessary to previously form all possible language packages. In the present invention, a language package can be formed by either one of the two above-described methods or by a method obtained by mixing the two methods with each other. In an example of the method obtained by mixing the two methods with each other, language packages that are likely to be used more often are previously formed by the second method. The other language packages (i.e., those language packages that are not used as often) are formed in the first method.

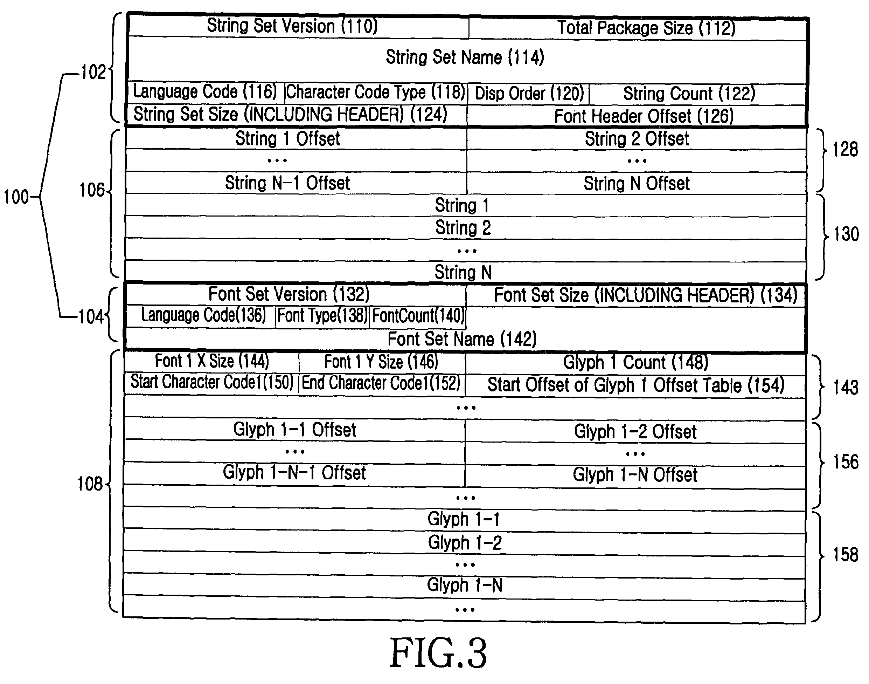

In the first method, the mobile communication terminal 10 includes a model name, a software version, a string set version, and a font set version as a default, and transmits language package request data including font types and character codes that can be supported by the mobile communication terminal 10 to the MLCPS 16 through the mobile communication network 12 and the WAP gateway 14. Accordingly, the MLCPS 16 forms the language package requested by a user in accordance with a language package format (that will be described later with reference to FIG. 3) according to an embodiment of the present invention on the basis of the package request data and transmits the formed language package to the mobile communication terminal 10.

In the second method, the mobile communication terminal 10 transmits language package request data including a model name, a software version, a string set version, and a font set version to the MLCPS 16 through the mobile communication network 12 and the WAP gateway 14. Accordingly, the MLCPS 16 transmits the previously formed language package requested by a user to the mobile communication terminal 10 on the basis of the language package request data.

FIG. 3 illustrates a format of a language package formed in the MLCPS 16, and transmitted to the mobile communication terminal 10 according to an embodiment of the present invention. The language package includes a header 100, a string 106, and a font 108. The header 100 includes a string header 102 and a font header 104. The string 106 includes a string offset field 128 and a real string field 130. The font 108 includes a font general information field 143, a glyph offset field 154, and a glyph field 156. The string header 102 is placed on the top. Below the string header 102, the string offset field 128, the string field 130, the font header 104, the font general information field 143, the glyph offset field 154, and the glyph field 156 are arranged, respectively.

In the header 100, the string header 102 includes a string set version field 110, a total package size field 112, a string set name field 114, a language code field 116, a character code type field 118, a display order field 120, a string count field 122, a string set size field 124, and a font header offset field 126. Version information for determining whether a string set is previously stored is recorded on the string set version field 110. The total size of the currently downloaded package is recorded on the total package size field 112. The name of the string set is recorded on the string set name field 114. Korean, English (expressed by the alphabet), and Japanese (expressed by Katakana) are included in examples of the name of the string set. The characteristic code of the language currently supported by the string set is recorded on the language code field 116. The characteristic code is endowed to each language. Character code type information expressed by the current string such as IS-8859, UNICODE, and UTF is recorded in the character code type field 118. Direction information, in which characters are displayed, is recorded on the display order field 120. Characters are displayed from left to right, from right to left, from top to bottom, and bi-directional. An example of a bi-directional language is Hebrew. The number of strings is recorded on the string count field 122. A size obtained by subtracting the font header 104 and the font 108 from the entire package is recorded on the string set size field 124. Position information where a font starts in the entire package, that is, position information where the font header 104 starts is recorded on the font header offset field 126. When "NULL" is recorded on the font header offset field 126, it means that a font set does not exist.

The string offset field 128 of the string 106 includes N string offset fields (i.e., String 1 Offset, String 2 Offset, ..., and String N Offset). Positions where real strings (i.e., String 1, String 2, ..., and String N) are placed are recorded on the respective string offset fields. The string field 130 of the string 106 includes N string fields (i.e., String 1, String 2, ..., and String N). Real strings used for the mobile communication terminal are recorded on the respective string fields. Examples of the strings are "my portable phone", "1: start menu registration", "2: menu screen setting", and "3: my name input".

The font header 104 includes a font set version field 132, a font set size field 134, a language code field 136, a font type field 138, a font count field 140, and a font set name field 142. A current font set version is recorded on the font set version field 132. The font set version is used when the control section 20 of the mobile communication terminal 10 determines whether a font set is previously stored in the memory section 30. The size of the font 108 including the font header 104 is recorded on the font set size field 134. The characteristic code of the language supported by the current font set is recorded on the language code field 136. A characteristic code is endowed to each language. Information indicating whether a font is a bit map or a vector is recorded on the font type field 138. Number information indicating a kind by each size is recorded on the font count field 140 when the font is bit map. The name of the font set is recorded on the font set name field 142. Examples of the names of the font set are mingcho, picture, and gulim.

In FIG. 3, the font general information field 143 of the font 108 includes a font k (a natural number) X size field 144, a font k Y size field 146, a glyph k count field 148, a start character code field 150, an end character code field 152, and a start offset field 154 of a glyph k offset table. The horizontal size of the font k is recorded on the font k X size field 144. The vertical size of the font k is recorded on the font k Y size field 146. The number of characters, which the font set k has, is recorded on the glyph k count. The start character code field 150 and the end character code field 152 are used when a character code set is desired to be partially used. For example, among character codes such as IS-8859, UNICODE, and UTF, in the case of ASIIC, if a partial character code set in the range of 0x20 to 0xEF is desired to be used when the full set of a character code is 0xxx to 0xFF, information corresponding to 0x20 is recorded on the start character code field 150 and information corresponding to 0xEF is recorded on the end character code field 152. The start offset information of the glyph k offset table is recorded on the start offset field 154 of the glyph k offset table.

A glyph k offset field 156 of the font 108 includes N glyph offset fields (Glyph k-1 Offset, ..., and Glyph k-N Offset) for glyph k. The positions of real glyphs Glyph k-1, ..., and Glyph k-N are recorded on the respective glyph k offset fields. A glyph field 158 of the font 108 includes N glyph fields (Glyph k-1, ..., and Glyph k-N). Real glyphs are recorded on the respective glyph fields. When it is assumed that the string is "my portable phone", a glyph "my", a glyph " " (a blank), a glyph "port", a glyph "able", and a glyph "phone" are respectively recorded on a field of Glyph 1-1, a field of Glyph 1-2, a field of Glyph 1-3, a field of Glyph 1-4, and a field of Glyph 1-5.

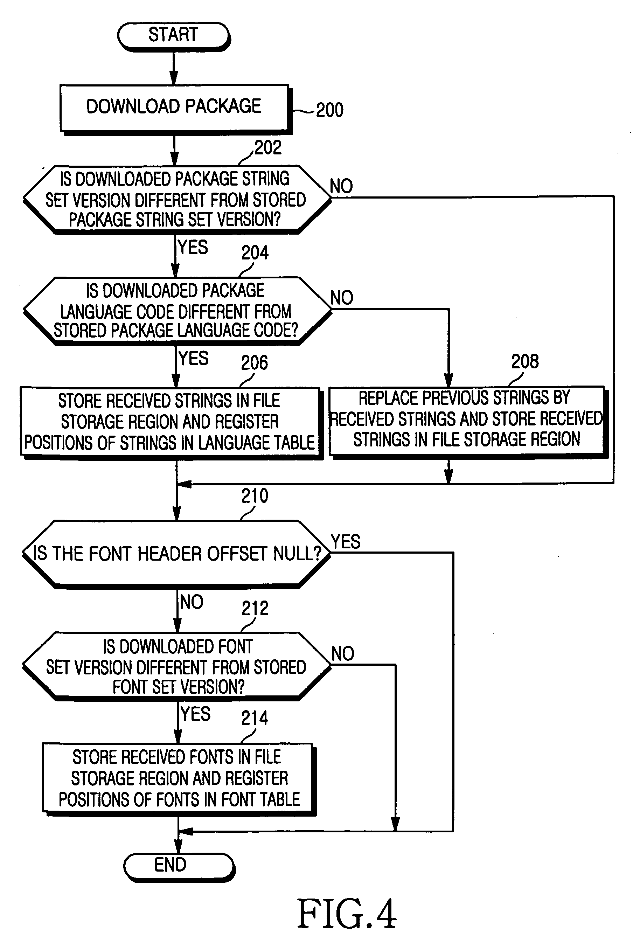

When a language package of a format illustrated in FIG. 3 is downloaded from the MLCPS 16 to the mobile communication terminal 10 through the WAP gateway 14 and the mobile communication network 12, the mobile communication terminal 10 processes the string and the font on the basis of a control flowchart illustrated in FIG. 4.

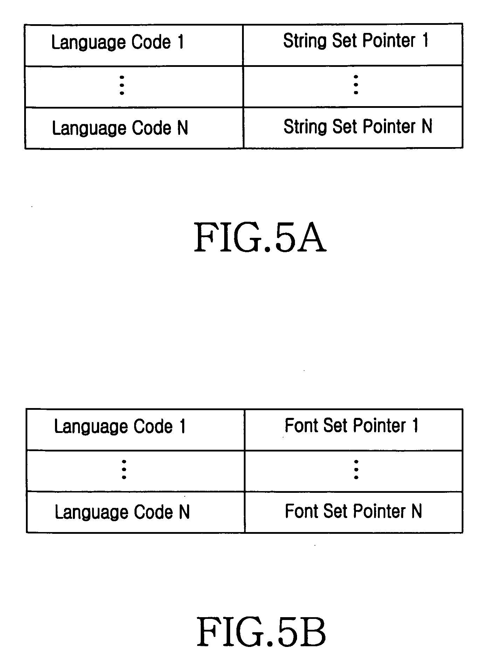

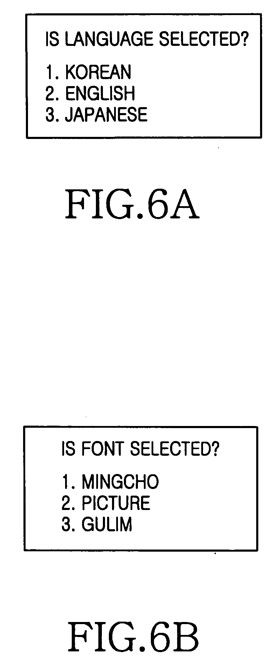

FIG. 4 is a flowchart illustrating string and font processing controls in a mobile communication terminal that downloads a language package according to an embodiment of the present invention. FIG. 5 is a block diagram illustrating a language table and a font table in the memory section 30 of the mobile communication terminal according to an embodiment of the present invention. FIG. 6 illustrates an example of formation of display part screens displayed on the display section 50 of the mobile communication terminal 10 when a user selects a language and a font.

The operations performed by the mobile communication terminal 10 when the language package is downloaded from the MLCPS 16 to the mobile communication terminal 10 will now be described in detail with reference to FIGS. 2 to 4.

After the control section 20 of the mobile communication terminal 10 downloads the language package, it proceeds to step 202 of FIG. 4. In step 202, the control section 20 determines whether the string set version of the downloaded language package is different from the string set version stored in the file storage region of the memory section 30. The string set version of the downloaded language package is recorded on the string set version field 100 illustrated in FIG. 3. If the string set version of the downloaded language package is the same as the string set version stored in the file storage region of the memory section 30, the downloaded string set is unnecessary. Therefore, the control section 20 ignores the downloaded string set, and proceeds to step 210.

When it is determined at the step 202 that the string set version of the downloaded language package is different from the string set version stored in the file storage region of the memory section 30, the control section proceeds to step 204. In step 204, the control section 20 determines whether the language code of the downloaded language package is different from the string set language code stored in the file storage region of the memory section 30. The string set language code of the downloaded language package is recorded on the language code field 116 illustrated in FIG. 3. If the string set language code of the downloaded language package is the same as the string set language code stored in the file storage region of the memory section 30, the control section proceeds to step 208. In step 208, the control section 20 replaces a previous string set by the downloaded string set and stores the downloaded string set in the file storage region of the memory section 30 indicated by the string set pointer of a corresponding language code without registering the language code and the string set pointer in a language table as illustrated in FIG. 5A. For example, when the language code of the downloaded language package is Korean and "Language Code 1" is Korean in the language table in FIG. 5A, the control section 20 replaces a previous string set by the downloaded string set and stores the downloaded string set in the file storage region of the memory section 30 indicated by "String Set Pointer 1" of "Language Code 1" in the language table. The string set stored in the file storage region includes the string set header 102 and the string 106 of the language package.

In step 204, when the string set language code of the downloaded language package is different from the string set language code stored in the file storage region of the memory section 30, the control section proceeds to step 206. In step 206 of FIG. 4, the control section 20 registers a language code and a string set pointer corresponding to the language code in a language table in FIG. 5A and stores the downloaded string set in the file storage region of the memory section 30 designated by the newly registered string set pointer of the corresponding language code.

In step 210, the control section 20 reads the font header offset field 126 of the string header 102 of the language package and determines whether the font header offset is "NULL". When it is determined that the font header offset is "NULL", it means that the font set does not exist. When the font header offset is "NULL", the control section 20 determines that the font set does not exist in the downloaded language package and the processes illustrated in FIG. 4 are terminated.

When it is determined in step 210 that the font header offset of the language package is not "NULL", the control section proceeds to step 212. In step 212, the control section 20 determines whether the font set version of the downloaded language package is different from the font set version stored in the file storage region of the memory section 30. The font set version of the downloaded language package is recorded on the font set version field 132 illustrated in FIG. 3. When it is determined that the font set version of the downloaded language package is the same as the font set version stored in the file storage region of the memory section 30, the control section 20 ignores the downloaded font set because the downloaded font set is unnecessary. Accordingly, the processes illustrated in FIG. 4 are terminated.

Alternatively, when it is determined in step 212 that the font set version of the downloaded language package is different from the font set version stored in the file storage region of the memory section 30, the control section proceeds to step 214. In step 214, the control section 20 newly registers a language code and a font set pointer corresponding to the language code in a font table in FIG. 5B and stores the downloaded font set in the file storage region of the memory section 30 indicated by the newly registered font set pointer of the corresponding language code. For example, when the language code of the downloaded language package is Korean and "Language Code 1" is Korean in the font table in FIG. 5B, the control section 20 stores the downloaded font set in the file storage region of the memory section 30 indicated by "Font Set Pointer 1" of "Language Code 1" in the font table.

As described above, when the string set pointer and the font set pointer corresponding to a language code are registered in the language table and the font table of the memory section 30 and the string set and the font set are stored in the file storage region, a user of the mobile communication terminal can display a desired language on the display section 50 of the mobile communication terminal using the string set and the font set that are stored in the memory section 30.

When a user of the mobile communication terminal presses a function key corresponding to a selection of a language, the control section 20 reads the string set name field 114 of the string sets stored in the file storage region of the memory section 30 and displays a language selection menu screen according to an example illustrated in FIG. 6A on the display section 50. Languages existing in the file region are displayed on the language selection menu screen displayed on the display section 50. It is preferable that languages are expressed by the language systems of the respective corresponding countries. For example, Korean is preferably expressed by Hangeul, English is preferably expressed by the English alphabet, and Japanese is preferably expressed by Katakana. Accordingly, a user of the mobile communication terminal can select a desired language.

When the user of the mobile communication terminal presses a function key corresponding to a selection of a font, the control section 20 reads the font set name field 142 of the font sets stored in the file region of the memory section 30 and displays a font selection menu screen according to an example as illustrated in FIG. 6B on the display section 50. The fonts existing in the file storage region are displayed on the font selection menu screen displayed on the display section 50. For example, the font set names such as "1. mingcho, 2. picture, 3. gulim" are displayed. Accordingly, the user of the mobile communication terminal can select desired language and font.

According to the present invention, it is possible for a mobile communication terminal to flexibly support multiple languages by downloading only languages desired by a user of the mobile communication terminal and displaying menu and message of the mobile communication terminal on a display window in the desired language and font. Accordingly, the user can lease a local mobile communication terminal in a foreign country and use the mobile communication terminal in the desired language.

While the invention has been shown and described with reference to certain preferred embodiments thereof, it will be understood by those skilled in the art that various changes in form and details may be made therein without departing from the scope of the invention as defmed by the appended claims.

## Claims

1. A communication system for supporting multiple languages for a mobile communication terminal, the system comprising:
a mobile communication network;
a multiple language contents provider server connected to the mobile communication network and including multiple language contents; and
a mobile communication terminal wirelessly connected to the mobile communication network;
wherein the mobile communication terminal is arranged to connect to the multiple language contents provider server through the mobile communication network, transmit language package request data to the multiple language contents provider server according to a request of a user, receive language package information provided from the multiple language contents provider server, and display menus and messages on a display window of the mobile communication terminal in a language selected by the user using the received language package information ; and
wherein the multiple language contents provider server is arranged to form a corresponding language package in response to reception of the language package request data and transmit the language package to the mobile communication terminal through the mobile communication network.

2. The communication system of claim 1, wherein the language package request data comprises a terminal model name, a software version, a string set version, and a font set version.

3. The communication system of claim 2, wherein the language package request data further comprises font types and character codes that are supported by the mobile communication terminal.

4. A method of supporting multiple languages for a mobile communication terminal in a communication system including a mobile communication network, a multiple language contents provider server connected to the mobile communication network and including multiple language contents, and the mobile communication terminal wirelessly connected to the mobile communication network, the method comprising the steps of:
transmitting language package request data including at least one string set version and one font set version to the multiple language contents provider server through the mobile communication network according to a language request of a user of the mobile communication terminal;
when language package information provided from the multiple language contents provider server is downloaded, dividing the downloaded language package information into a string set and a font set corresponding to a language selected by the user;
managing the string set and the font set; and
displaying menus and messages on a terminal display in the language selected by the user using the managed string set and font set.

5. The method of claim 4, wherein the language package comprises a header including string header information and font header information, a string including string offset information and real strings, and a font including font general information, glyph offset information, and glyphs.

6. The method of claim 5, wherein the header comprises a string header including the string header information and a font header including the font header information.

7. The method of claim 6, wherein the string header comprises:
a string set version field in which string set version information is recorded;
a total package size field in which a total size of a currently downloaded language package is recorded;
a string set name field in which a name of a string set is recorded;
a language code field in which a characteristic code supported by a current string set is recorded;
a character code type field in which character code type information represented by the current string is recorded;
a display order field in which information on a direction where characters are developed is recorded;
a string count field, in which the number of strings is recorded;
a string set size field in which a string set size obtained by subtracting a font header and a font from an entire language package is recorded; and
a font header offset field in which information on a position where a font starts in the entire language package is recorded.

8. The method of claim 6 or 7, wherein the font header comprises:
a font set version field in which a font set version of the language package is recorded;
a font set size field in which a size of the font including the font header is recorded;
a language code field in which a characteristic code of a language supported by the font set of the language package is recorded;
a font type field in which information representing whether the font is a bit map or a vector is recorded;
a font count field in which number information representing a kind by each size is recorded when the font type is a bit map font; and
a font set name field in which the name of the font set is recorded.

9. The method of one of claims 6 to 8, wherein the font comprises a font general information field including the font general information, a glyph offset field including the glyph offset information, and a glyph field including the glyphs.

10. The method of claim 9, wherein the font general information field comprises:
a font k X size field in which a horizontal size of a font k is recorded, k being a natural number;
a font k Y size field in which a vertical size of a font k is recorded;
a glyph k count field in which a number of characters a font set k has is recorded;
a start character code field and an end character code field used when a character code set is desired to be partially used; and
a start offset field of a glyph k offset table in which start offset information of a glyph k offset table is recorded.

11. The method of claim 9 or 10, wherein the glyph offset field comprises a plurality of glyph offset fields for glyph k, wherein positions where real glyphs exist are recorded on the respective glyph k offset fields.

12. The method of any one of claims 9 to 11, wherein the glyph field comprises a plurality of glyph fields, wherein real glyphs are recorded on the respective glyph fields.

13. The method of any one of claims 5 to 12, wherein the string comprises a string offset field in which the string offset information is recorded, and a string field in which the real strings are recorded.

14. The method of claim 13, wherein the string offset field comprises a plurality of string offset fields, wherein positions where real strings exist are recorded on the respective string offset fields.

15. The method of claim 13 or 14, wherein the string field comprises a plurality of string fields, wherein real strings used for the mobile communication terminal are recorded on the respective string fields.

16. A method of supporting multiple languages for a mobile communication terminal in a communication system including a mobile communication network, a multiple language contents provider server connected to the mobile communication network and including multiple language contents, and the mobile communication terminal wirelessly connected to the mobile communication network, the method comprising the steps of:
transmitting language package request data including at least one string set version and one font set version to the multiple language contents provider server through the mobile communication network according to language request of a user of the mobile communication terminal;
when language package information provided from the multiple language contents provider server is downloaded, comparing the string set version and the language code of the language package with previously stored string set version and language code, selectively registering a string set pointer corresponding to a language code in a language table of a memory, and selectively storing downloaded strings in a file storage region of a memory designated by a string set pointer corresponding to the language code;
determining whether a font set exists in the language package; and
when the font set exists in the language package, comparing a font set version of the language package with a previously stored font set version, selectively registering a font set pointer corresponding to a language code in a language table of a memory, and selectively storing downloaded fonts in a file storage region of a memory designated by a font set pointer corresponding to the language code.

17. The method of claim 16, further comprising the step of displaying menus and messages on a terminal display in a language and a font selected by a user using strings and fonts stored in a file storage region of the memory.

18. A recording medium readable in a computer comprising
a header including string header information and font header information, a string including string offset information and real strings, and
a font including font general information, glyph offset information and glyphs.

19. The recording medium of claim 18 adapted according to one of claims 6 to 15.

20. A system of supporting multiple languages for a mobile communication terminal in a communication system comprising
a mobile communication network;
a multiple language contents provider server connected to the mobile communication network and including multiple language contents;
a multiple language service terminal connected to the multiple language contents provider server through the mobile communication network, for transmitting language package request data to the multiple language contents provider server according to a request of a user, receiving language package information provided from the multiple language contents provider server, and storing the received language package information; and
a mobile communication terminal wirelessly connected to the mobile communication network, receiving the language package information from the multiple language contents provider server and displaying menus and messages on a display window of the mobile communication terminal in a language selected by the user; and
wherein the multiple language contents provider server forms a corresponding language package in response to reception of the language package request data and transmits the language package to the mobile communication terminal through the mobile communication network.
